# EUROPÄISCHE PATENTSCHRIFT

(11) **EP 3 948 810 B1**
(45) Veröffentlichungstag und Bekanntmachung des Hinweises auf die Patenterteilung: **17.12.2025**
(21) Anmeldenummer: 20716414.6
(22) Anmeldetag: 27.03.2020
(51) Int. Cl.: G07C 9/00, B60R 25/40

(54) **VERFAHREN ZUR STEUERUNG EINES MOBILEN IDENTIFIKATIONSGEBERS**
METHOD FOR CONTROLLING A MOBILE IDENTIFICATION TRANSMITTER
PROCÉDÉ DE COMMANDE D'UN CAPTEUR D'IDENTIFICATION MOBILE

(30) Priorität: 29.03.2019 DE 102019108255
(43) Veröffentlichungstag der Anmeldung: 09.02.2022
(73) Patentinhaber: Huf Hülsbeck & Fürst GmbH & Co. KG, 42551 Velbert (DE)
(72) Erfinder: ZILLER, Boris, 40885 Ratingen (DE)
(74) Vertreter: Bals & Vogel Patentanwälte PartGmbB
(86) Internationale Anmeldenummer: PCT/EP2020/058712
(87) Internationale Veröffentlichungsnummer: WO 2020/201085

(56) Entgegenhaltungen:
- DE-A1- 102011 050 160
- DE-A1- 102015 223 342
- DE-A1- 102016 225 284
- DE-A1- 19 927 253
- US-A1- 2014 058 586
- US-A1- 2016 127 473
- US-A1- 2018 115 859

## Beschreibung

Die vorliegende Erfindung betrifft ein Verfahren zur Steuerung eines mobilen Identifikationsgebers nach unabhängigen Verfahrensanspruch. Ferner betrifft die die Erfindung ein entsprechendes System mit einem mobilen Identifikationsgeber und einem Sicherheitssystem eines Fahrzeuges nach dem unabhängigen Systemanspruch. Zudem betrifft die Erfindung einen entsprechenden mobilen Identifikationsgeber nach dem unabhängigen Vorrichtungsanspruch.

Mobile Identifikationsgeber (ID-Geber) werden als elektronische Schlüssel eingesetzt, um eine Alternative zum mechanischen Schlüssel eine berührungslose Entriegelung eines Sicherheitssystems eines Fahrzeuges zu ermöglichen. Weiter können ID-Geber noch für zahlreiche weitere Aufgaben bei Fahrzeugen zum Einsatz kommen, um den Bedienerkomfort und die Sicherheit zu erhöhen. Zumeist werden zur Kommunikation des ID-Gebers mit dem Fahrzeug (bzw. mit dem Sicherheitssystem des Fahrzeuges) Funksysteme im Niederfrequenzbereich eingesetzt. Dadurch lassen sich Authentifizierungsdaten kontaktlos (drahtlos) übertragen, um eine Entriegelung des Sicherheitssystems und/oder eine Startfunktion eines Motors des Fahrzeuges bei positiver Authentifizierung zu ermöglichen.

Aus einer weiteren Distanz kann die Authentifizierung durch einen Benutzer des Fahrzeuges bspw. mittels Knopfdrucks initiiert werden. Durch diese aktive Betätigung des Identifikationsgebers durch den Benutzer wird das Signal mit den Authentifizierungsdaten, wie z. B. einem ID-Code, an eine fahrzeugseitige Elektronik des Sicherheitssystems versendet. Solche Funktionalität wird auch als Active-Keyless-Entry-Funktionalität bezeichnet (wenn z. B. aktiv ein Knopf gedrückt werden muss). Neben oder statt der Active-Keyless-Entry-Funktionalität werden zunehmend auch Sicherheitssysteme mit einer sogenannten Passive-Keyless-Entry- oder Passive-Keyless-Go-Funktionalität verwendet. Im Gegensatz zur konventionellen Fernbedienung ist bei der Passive-Keyless-Entry-Funktionalität keine aktive Bedienung des ID-Gebers (gemeint ist ohne aktiven Knopfdruck) durch den Benutzer notwendig. Bspw. bei Annäherung des Benutzers oder bei Betätigung eines Türgriffs kann ein Wecksignal vom Fahrzeug über eine Funkverbindung, insbesondere über eine LF-Funkverbindung (LF steht für engl. Low Frequency oder dt. Niederfrequenz), zum Identifikationsgeber übertragen werden. Zusammen mit dem Wecksignal oder nach einer Antwort des ID-Gebers auf das Wecksignal wird ein ID-Abfragesignal vom Fahrzeug zum ID-Geber geschickt. Daraufhin sendet der ID-Geber ein Funksignal mit dem Code zur Authentifizierung an das Sicherheitssystem des Fahrzeuges. Ferner kann zudem eine weitere Funktionalität des ID-Gebers im Inneren des Fahrzeuges ermöglicht werden, nämlich eine Freigabe einer Wegfahrsperre, um einen Motorstart zu ermöglichen.

Bei derartigen (insbesondere passiven) Systemen werden Sicherheitsmechanismen benötigt, um das Fahrzeug, insbesondere die Sicherheitssysteme, vor Manipulation und Diebstahl zu schützen. Bspw. müssen Vorkehrungen getroffen werden, um zu verhindern, dass über einen sogenannten "Relay-Station-Attack" Angriff unbefugt eine Sicherheitsfunktion des Fahrzeuges, wie die Entriegelung und/oder der Motorstart des Fahrzeuges, aktiviert wird.

Hierzu können ID-Geber zur ihrer automatischen Abschaltung einen Bewegungssensor aufweisen, um die Kommunikationsschnittstelle des ID-Gebers zu deaktivieren, wenn über eine gewisse Zeitdauer keine Bewegung detektiert wird. Auf diese Weise kann verhindert werden, dass der ID-Geber bei Nichtbenutzung zur unberechtigten Öffnung des Fahrzeugs genutzt wird und außerdem Energie gespart wird.

Hierbei ergibt sich allerdings das Problem, dass der ID-Geber im Fahrzeuginneren ggf. auch nach einer gewissen Zeitdauer abgeschaltet wird, und daher nicht mehr durch das Fahrzeug erkannt werden kann. Bspw. schaltet der Bewegungssensor die LF-Kommunikation des ID-Gebers aus, und kann entsprechend nicht mehr über LF-Schnittstellen im Inneren des Fahrzeugs detektiert oder geortet (Positionsbestimmung des ID-Gebers im Auto) werden. Somit wird die Funktionalität des ID-Gebers im Inneren des Fahrzeuges, bspw. zum Start eines Motors, gestört. DE 10 2015 223342 A1 offenbart ein Verfahren zum Betreiben einer Autorisierungsvorrichtung für ein Fahrzeug.

Es ist daher eine Aufgabe der vorliegenden Erfindung, die voranstehend beschriebenen Nachteile zumindest zum Teil zu überwinden. Insbesondere ist es Aufgabe der vorliegenden Erfindung, eine verbesserte, sicherere und/oder zuverlässigere Kommunikation des ID-Gebers mit einem Sicherheitssystem eines Fahrzeuges zu ermöglichen. Insbesondere soll die Funktionalität des ID-Gebers im Inneren des Fahrzeuges sichergestellt werden.

Die voranstehende Aufgabe wird gelöst durch ein Verfahren mit den Merkmalen des unabhängigen Verfahrensanspruches, ein System mit den Merkmalen des unabhängigen Systemanspruches sowie durch einen mobilen Identifikationsgeber mit den Merkmalen des unabhängigen Vorrichtungsanspruches. Weitere Vorteile und Details der Erfindung ergeben sich aus den jeweiligen Unteransprüchen, der Beschreibung und den Zeichnungen. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Aufgabe wird insbesondere gelöst durch ein Verfahren zur Steuerung eines mobilen Identifikationsgebers (im Weiteren ID-Geber oder Schlüssel genannt) für ein Sicherheitssystem eines Fahrzeuges, wobei der mobile Identifikationsgeber folgende Elemente aufweist: mindestens eine Kommunikationseinheit, um zumindest eine Datenkommunikation mit dem Sicherheitssystem aufzubauen, und einen Bewegungssensor, um eine Bewegung des mobilen Identifikationsgebers zu detektieren, wobei der Bewegungssensor dazu dient, die mindestens eine Kommunikationseinheit in Abhängigkeit der Bewegung des mobilen Identifikationsgebers anzusteuern, insbesondere auszuschalten, wenn der Bewegungssensor keine Bewegung des mobilen Identifikationsgebers detektiert. Im Rahmen der Erfindung wird eine Überprüfung mindestens einer Ortsposition des mobilen Identifikationsgebers im Verhältnis zum Fahrzeug durchgeführt, wobei mindestens eine Funktion beim mobilen Identifikationsgeber in Abhängigkeit der mindestens einen Ortsposition des mobilen Identifikationsgebers im Verhältnis zum Fahrzeug aktiviert wird.

Im Rahmen der Erfindung ist es denkbar, dass die Kommunikationseinheit zwei unterschiedliche Funktionalitäten des Identifikationsgebers im Verhältnis zum Fahrzeug bereitstellen kann, nämlich außerhalb des Fahrzeuges und innerhalb des Fahrzeuges. Außerhalb des Fahrzeuges kann die Kommunikationseinheit für eine Betätigung, bspw. Entriegelung und/oder Verriegelung, des Sicherheitssystems des Fahrzeuges dienen. Innerhalb des Fahrzeuges kann die Kommunikationseinheit einen Motorstart verifizieren und/oder persönliche Daten, bspw. Einstellungsdaten für das Fahrzeugzubehör, übertragen. Hierzu kann die Kommunikationseinheit zwei verschiedene Schnittstellen (bzw. verschiedene Sende- und/oder Empfangseinheiten) oder eine gemeinsame Schnittstelle (bzw. eine gemeinsame Sende- und/oder Empfangseinheit) für unterschiedliche Funktionalitäten aufweisen.

Auch ist es denkbar, dass die Überprüfung der Ortsposition des mobilen Identifikationsgebers im Verhältnis zum Fahrzeug mithilfe der Kommunikationseinheit bzw. einer (ggf. weiteren) Schnittstelle der Kommunikationseinheit durchgeführt wird. Zudem ist es denkbar, dass eine separate Erfassungseinheit mit einer eigenen Schnittstelle für die Überprüfung der Ortsposition des mobilen Identifikationsgebers im Verhältnis zum Fahrzeug genutzt wird. Für die Überprüfung der Ortsposition des mobilen Identifikationsgebers im Verhältnis zum Fahrzeug kann vorzugsweise die NFC-Technologie genutzt werden.

Die erfindungsgemäße Lösung sieht nun vor, dass in Abhängigkeit der mindestens einen Ortsposition des mobilen Identifikationsgebers im Verhältnis zum Fahrzeug, insbesondere im Inneren des Fahrzeugs, aktiv Funktionen beim mobilen Identifikationsgeber aktiviert werden. Die Ortspositionen können dabei eine Ortsposition innerhalb des Fahrzeuges und eine Ortsposition außerhalb des Fahrzeuges vorsehen. Die Funktionen beim mobilen Identifikationsgeber im Fahrzeuginneren können insbesondere dazu dienen, dass der Identifikationsgeber durch das Fahrzeug sicher identifiziert wird und zuverlässig im Inneren des Fahrzeuges, bspw. zum Start eines Motors und/oder zum Übertragen von persönlichen Daten, agieren kann. Die Funktionen dienen anders ausgedrückt dazu, im Inneren des Fahrzeuges die vollständige Abschaltung des ID-Gebers durch den Bewegungssensor zu verhindern und ggf. dennoch ein Energiesparen zu ermöglichen. Somit wird außerdem vermieden, dass das Fahrzeug den Bewegungssensor, zumindest dauerhaft, ausschalten muss, sodass der Identifikationsgeber nach wie vor zuverlässig gegen einen "Relay-Station-Attack" Angriff, insbesondere beim Wechsel von innen nach außen, geschützt werden kann.

Als Beispiel für solche Funktionen kann eine Verringerung (im Vergleich zum Normalmodus, in dem die Kommunikationseinheit des ID-Gebers die normale Sensitivität bzw. Sensibilität aufweist, um einen Datenaustausch u.a. mit dem Fahrzeug vornehmen zu können) einer Sensitivität bzw. Sensibilität der Kommunikationseinheit des ID-Gebers (bspw. der Schnittstelle des ID-Gebers für die Funktionalität innerhalb des Fahrzeuges) dienen, was außerdem zu einem geringeren Energieverbrauch führt. Da sich der ID-Geber im Fahrzeuginneren in unmittelbarer Nähe zum Fahrzeug befindet, ist nur eine geringe Sensitivität der Kommunikationseinheit für die LF-Kommunikation (im Vergleich zum Normalmodus) notwendig, um durch das Fahrzeug detektiert zu werden. Zudem ist es denkbar, dass eine solche Funktion ein Ausschalten der Schnittstelle des ID-Gebers für die Funktionalität außerhalb des Fahrzeuges umfassen kann, wenn der Bewegungssensor keine Bewegung des ID-Gebers detektiert. Somit kann ein Ausschalten des Bewegungssensors ganz vermieden werden. Als weitere Funktion kann ein Timer beim ID-Geber eingestellt werden, welcher nur für eine bestimmte Zeitdauer die Funktionen ausführt, z. B. die Sensitivität herabsetzt und ggf. den Bewegungssensor deaktiviert. Solange sich der ID-Geber im Fahrzeug befindet, kann in regelmäßigen Abständen ein Timer getriggert werden, um durchgehend die Herabsetzung der Sensitivität und ggf. die Deaktivierung der Kommunikationseinheit durch den Bewegungssensor zu verhindern. Dabei ist es denkbar, dass die Funktionen durch den ID-Geber selbst (hierbei kann der ID-Geber das Fahrzeug entsprechend informieren) oder durch das Fahrzeug aktiviert werden.

Die Begriffe "Sensitivität bzw. Sensibilität" (Funkempfindlichkeit) der Kommunikationseinheit des ID-Gebers korrelieren mit der benötigten elektrischen Energie für die Funckommunikation des ID-Gebers. Im Normalmodus ist somit von einem höheren elektrischen Energiebedarf der Kommunikationseinheit des ID-Gebers auszugehen als in einem verringerten Zustand, also bei einer Verringerung der Sensitivität bzw. Sensibilität der Kommunikationseinheit des ID-Gebers.

Ferner kann die Erfindung bei einem Verfahren zur Steuerung eines mobilen Identifikationsgebers für ein Sicherheitssystem eines Fahrzeuges vorsehen, dass die mindestens eine Ortsposition des mobilen Identifikationsgebers im Verhältnis zum Fahrzeug erst dann überprüft wird, wenn der Bewegungssensor keine Bewegung des mobilen Identifikationsgebers detektiert. Auf diese Weise kann der Aufwand und die Rechenleistung zum Ausführen des Verfahrens reduziert werden. Dabei braucht das Verfahren nur dann die mindestens eine Ortsposition des mobilen Identifikationsgebers im Verhältnis zum Fahrzeug überprüfen und bestimmte Funktionen aktivieren, wenn der Bewegungssensor im Begriff ist, den ID-Geber oder die Kommunikationseinheit auszuschalten.

Weiterhin kann die Erfindung bei einem Verfahren zur Steuerung eines mobilen Identifikationsgebers für ein Sicherheitssystem eines Fahrzeuges vorsehen, dass die mindestens eine Ortsposition des mobilen Identifikationsgebers im Verhältnis zum Fahrzeug eine erste Ortsposition innerhalb des Fahrzeuges und/oder eine zweite Ortsposition außerhalb des Fahrzeuges vorsieht. Somit kann sicher zwischen unterschiedlichen Funktionalitäten des Identifikationsgebers im Verhältnis zum Fahrzeug unterschieden werden, nämlich außerhalb des Fahrzeuges und innerhalb des Fahrzeuges. Außerhalb des Fahrzeuges geht es um die Entriegelung und/oder Verriegelung des Sicherheitssystems des Fahrzeuges. Innerhalb des Fahrzeuges geht es darum, einen Motorstart zu verifizieren und/oder persönliche Daten, bspw. Einstellungsdaten für das Fahrzeugzubehör, zu übertragen. Innerhalb des Fahrzeuges sorgen die positionsabhängigen Funktionen beim ID-Geber dafür, dass der ID-Geber seine Funktionalität, auch wenn energiesparend, ausführen kann, ohne jedoch die Motion-Funktion des Bewegungssensors beim Übergang von innen nach außen ganz oder zumindest dauerhaft zu unterbinden.

Des Weiteren ist es im Rahmen der Erfindung bei einem Verfahren zur Steuerung eines mobilen Identifikationsgebers für ein Sicherheitssystem eines Fahrzeuges denkbar, dass die mindestens eine Funktion aktiviert wird, wenn eine erste Ortsposition des mobilen Identifikationsgebers innerhalb des Fahrzeuges erfasst wird. Somit wird der erfindungsgemäßen Problematik gezielt im Inneren des Fahrzeuges begegnet, vorzugsweise ohne die Funktionalität des Identifikationsgebers außerhalb des Fahrzeuges zu beeinträchtigen.

Zudem kann die Erfindung bei einem Verfahren zur Steuerung eines mobilen Identifikationsgebers für ein Sicherheitssystem eines Fahrzeuges vorsehen, dass die mindestens eine Funktion vorsieht, dass der mobile Identifikationsgeber in einen Schlafmodus, insbesondere für eine bestimmte Zeit, überführt wird. Schlafmodus kann dabei bedeuten, dass der ID-Geber, insbesondere die mindestens eine Kommunikationseinheit, in seiner Sensibilität verringert ist, aber nicht gänzlich ausgeschaltet wird. Somit kann im Inneren des Fahrzeuges stets sichergestellt werden, dass das Fahrzeug den (berechtigten) ID-Geber im Inneren des Fahrzeuges zuverlässig erkennt.

Außerdem kann die Erfindung bei einem Verfahren zur Steuerung eines mobilen Identifikationsgebers für ein Sicherheitssystem eines Fahrzeuges vorsehen, dass die mindestens eine Funktion folgende Funktionen vorsieht: eine erste Funktion, um die Sensibilität der mindestens einen Kommunikationseinheit anzusteuern, insbesondere zu verringern, und/oder den Bewegungssensor zu deaktivieren, und/oder eine zweite Funktion, um einen Timer, insbesondere für eine bestimmte Zeit, zu starten, wobei insbesondere der Timer dazu dient, die Sensibilität der mindestens einen Kommunikationseinheit für eine bestimmte Zeit zu verringern und/oder den Bewegungssensor für eine bestimmte Zeit zu deaktivieren. Durch eine verringerte Sensibilität kann die Funktionalität des ID-Gebers im Inneren des Fahrzeuges sichergestellt werden. Durch das Einstellen eines Timers kann eine zeitliche Begrenzung für die Funktionen eingestellt werden, die insbesondere beim Wechsel der Ortsposition und somit der Funktionalitäten des Identifikationsgebers im Verhältnis zum Fahrzeug vorteilhaft sein kann, um die Motion-Funktion des Bewegungssensors außerhalb des Fahrzeuges nicht zu beeinträchtigen.

Ferner kann die Erfindung bei einem Verfahren zur Steuerung eines mobilen Identifikationsgebers für ein Sicherheitssystem eines Fahrzeuges vorsehen, dass die mindestens eine Funktion eine zweite Funktion vorsieht, um einen Timer, insbesondere für eine bestimmte Zeit, zu starten, wobei nach Ablauf des Timers eine Überprüfung mindestens einer Position des mobilen Identifikationsgebers bezüglich des Fahrzeuges durchgeführt wird, und wobei der Timer erneut gestartet, insbesondere getriggert, wird, wenn nach Ablauf des Timers eine erste Position des mobilen Identifikationsgebers innerhalb des Fahrzeuges erfasst wird. Somit kann ermöglicht werden, dass, solange der ID-Geber sich innerhalb des Fahrzeuges befindet, seine Funktionalität dort sichergestellt ist. Durch die Triggerfunktion kann außerdem die Zeitdauer des Timers herabgesetzt werden, um einen schnelleren Wechsel der Funktionalitäten des Identifikationsgebers im Verhältnis zum Fahrzeug von innen nach außen zu ermöglichen.

Weiterhin kann die Erfindung bei einem Verfahren zur Steuerung eines mobilen Identifikationsgebers für ein Sicherheitssystem eines Fahrzeuges vorsehen, dass die Datenkommunikation über eine Funkverbindung, insbesondere über eine Niederfrequenz-Funkverbindung durchgeführt wird. Die Niederfrequenz-Funkverbindung ermöglicht eine Datenkommunikation zwischen dem ID-Geber und dem Sicherheitssystem über eine begrenzte Reichweite ggf. mit einer Abstandserfassung zwischen dem ID-Geber und dem Fahrzeug. Somit kann die Passive-Keyless-Entry-Funktionalität am ID-Geber mit einer erhöhten Sicherheit sichergestellt werden.

Des Weiteren kann die Erfindung bei einem Verfahren zur Steuerung eines mobilen Identifikationsgebers für ein Sicherheitssystem eines Fahrzeuges vorsehen, dass die Datenkommunikation mit einer Reichweite bis zu 2 m, vorzugsweise 1 m, durchgeführt wird. Somit können ungewollte und/oder unberechtigte Fernaktivierungen der Datenkommunikation vermieden werden.

Zudem kann die Erfindung bei einem Verfahren zur Steuerung eines mobilen Identifikationsgebers für ein Sicherheitssystem eines Fahrzeuges vorsehen, dass die Datenkommunikation zur Übermittlung eines Identifizierungscodes vom mobilen Identifikationsgeber an das Sicherheitssystem des Fahrzeuges dient. Mithilfe des Identifizierungscodes kann die Zugangsberechtigung des Benutzers verifiziert werden (Funktionalität außerhalb des Fahrzeuges) und/oder der Motorstart freigegeben werden (Funktionalität innerhalb des Fahrzeuges).

Außerdem kann die Erfindung bei einem Verfahren zur Steuerung eines mobilen Identifikationsgebers für ein Sicherheitssystem eines Fahrzeuges vorsehen, dass als der Bewegungssensor ein Neigungsschalter, ein Lagesensor und/oder ein Beschleunigungssensor verwendet werden/wird. Als Neigungsschalter sind einfache elektromechanische oder sensitive elektronische Neigungsschalter denkbar. Lagesensor verwenden einfach mechanische Elemente, um aus einer Lageänderung auf eine Bewegung zu schließen. Beschleunigungssensoren können einfach und kostengünstig umgesetzt werden.

Ferner kann die Erfindung bei einem Verfahren zur Steuerung eines mobilen Identifikationsgebers für ein Sicherheitssystem eines Fahrzeuges vorsehen, dass die Datenkommunikation in regelmäßigen Abständen durchgeführt wird. Somit kann das Sicherheitssystem des Fahrzeuges die Umgebung nach einem berechtigten ID-Geber quasi abtasten.

Weiterhin ist es denkbar, dass das Sicherheitssystem des Fahrzeuges die Datenkommunikation, vorzugsweise in regelmäßigen Abständen, starten kann. Auf diese Weise kann das Sicherheitssystem des Fahrzeuges die Umgebung nach einem berechtigten ID-Geber abtasten und die Datenkommunikation passiv aus der Sicht des ID-Gebers einleiten (ohne Knopfdruck am ID-Geber), wenn ein ID-Geber in der Umgebung des Fahrzeuges erkannt wurde.

Des Weiteren ist es denkbar, dass das Sicherheitssystem des Fahrzeuges ein Wecksignal und/oder ein ID-Abfragesignal, vorzugsweise in regelmäßigen Abständen, aussenden kann. Einerseits ist es denkbar, dass das Sicherheitssystem des Fahrzeuges im ersten Schritt ein kurzes Signal nur zum Wecken des ID-Gebers aussendet und im zweiten Schritt dann eine ID-Abfrage durchführt. Zudem ist es denkbar, dass das Sicherheitssystem des Fahrzeuges direkt im gleichen Schritt ein etwas längeres Signal zum Wecken und zum Verifizieren des ID-Gebers aussendet.

Zudem sieht die Erfindung bei einem Verfahren zur Steuerung eines mobilen Identifikationsgebers für ein Sicherheitssystem eines Fahrzeuges vor, dass die Überprüfung der Ortsposition des mobilen Identifikationsgebers im Verhältnis zum Fahrzeug in einem Sicherheitsabstand durchgeführt wird, wobei der Sicherheitsabstand kleiner, vorzugsweise mindestens 10 Mal kleiner, als die Reichweite der Datenkommunikation ist, wobei bevorzugt der Sicherheitsabstand maximal 10 cm beträgt. Somit kann die Überprüfung der Ortsposition mit erhöhter Sicherheit gegen unerlaubten Zugriff und/oder Fehlbetätigungen durchgeführt werden.

Außerdem ist es denkbar, dass eine Bluetooth- und/oder NFC-Technologie genutzt wird, um eine erste Ortsposition des mobilen Identifikationsgebers innerhalb des Fahrzeuges zu überprüfen. Somit kann die Überprüfung der Ortsposition mit einem Sicherheitsabstand ermöglicht werden. Bei der NFC-Technologie werden magnetische Felder für induktive Kopplung oder Nahfeldkopplung (NFC) genutzt. Dabei werden die Datenübertragung und die Energieversorgung über das magnetische Nahfeld von Spulen in einem, bspw. kraftfahrzeugseitigen, Lesegerät und in einem, bspw. ID-Geber-seitigen, Tag realisiert.

Ferner wird die erfindungsgemäße Aufgabe durch ein System mit einem mobilen Identifikationsgeber und einem Sicherheitssystem eines Fahrzeuges gelöst, wobei der mobile Identifikationsgeber folgende Elemente aufweist: mindestens eine Kommunikationseinheit, um zumindest eine Datenkommunikation mit dem Sicherheitssystem aufzubauen, und einen Bewegungssensor, um eine Bewegung des mobilen Identifikationsgebers zu detektieren, wobei der Bewegungssensor dazu aufgeführt ist, die mindestens eine Kommunikationseinheit in Abhängigkeit der Bewegung des mobilen Identifikationsgebers anzusteuern, insbesondere auszuschalten, wenn der Bewegungssensor keine Bewegung des mobilen Identifikationsgebers detektiert, wobei eine Erfassungseinheit vorgesehen ist, um mindestens eine Ortsposition des mobilen Identifikationsgebers im Verhältnis zum Fahrzeug zu bestimmen, und wobei die Erfassungseinheit dazu aufgeführt ist, mindestens eine Funktion beim mobilen Identifikationsgeber in Abhängigkeit der mindestens einen Ortsposition des mobilen Identifikationsgebers im Verhältnis zum Fahrzeug zu aktivieren. Mithilfe des erfindungsgemäßen Systems werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Die Erfassungseinheit kann dabei zumindest zum Teil innerhalb der Kommunikationseinheit auf der Seite des ID-Gebers und/oder zumindest zum Teil innerhalb des Sicherheitssystems des Fahrzeuges implementiert werden. Zudem ist es denkbar, dass die Erfassungseinheit unabhängig von der Kommunikationseinheit im ID-Geber umgesetzt werden kann, sowohl auf der Seite des ID-Gebers als auch auf der Seite des Sicherheitssystems des Fahrzeuges.

Weiterhin kann die Erfindung bei einem System vorsehen, dass eine Steuereinheit vorgesehen ist, die dazu ausgeführt ist, ein Verfahren durchzuführen, welches wie oben beschrieben ablaufen kann. Somit können die Vorteile des erfindungsgemäßen Verfahrens mithilfe des erfindungsgemäßen Systems erreicht werden. Mithilfe einer solchen Steuereinheit können sogar bekannte Systeme mit der erfindungsgemäßen Funktionalität aufgerüstet werden.

Des Weiteren kann die Erfindung bei einem System vorsehen, dass die Steuereinheit innerhalb des mobilen Identifikationsgebers und/oder innerhalb des Sicherheitssystems des Fahrzeuges vorgesehen ist, und/oder dass die Steuereinheit eine Steuerelektronik innerhalb des mobilen Identifikationsgebers und/oder eine Steuerelektronik innerhalb des Sicherheitssystems des Fahrzeuges aufweist. Somit kann die erfindungsgemäße Funktionalität flexibel von Seiten des ID-Gebers und/oder des Sicherheitssystems des Fahrzeuges realisiert werden.

Zudem kann die Erfindung bei einem System vorsehen, dass die Erfassungseinheit innerhalb des mobilen Identifikationsgebers und/oder innerhalb des Sicherheitssystems des Fahrzeuges vorgesehen ist, und/oder dass die Erfassungseinheit ein Erfassungselement innerhalb des mobilen Identifikationsgebers und/oder ein Erfassungselement innerhalb des Sicherheitssystems des Fahrzeuges aufweist. Somit können die ortsabhängigen Funktionen flexibel von Seiten des ID-Gebers und/oder des Sicherheitssystems des Fahrzeuges umgesetzt werden.

Ferner wird die erfindungsgemäße Aufgabe durch einen mobilen Identifikationsgeber mit einer Steuereinheit gelöst, die dazu ausgeführt ist, den mobilen Identifikationsgeber gemäß einem Verfahren anzusteuern, welches wie oben beschrieben ablaufen kann. Mithilfe des erfindungsgemäßen mobilen Identifikationsgebers werden die gleichen Vorteile erreicht, die oben im Zusammenhang mit dem erfindungsgemäßen Verfahren und/oder mit dem erfindungsgemäßen System beschrieben wurden. Auf diese Vorteile wird vorliegend vollumfänglich Bezug genommen.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt:

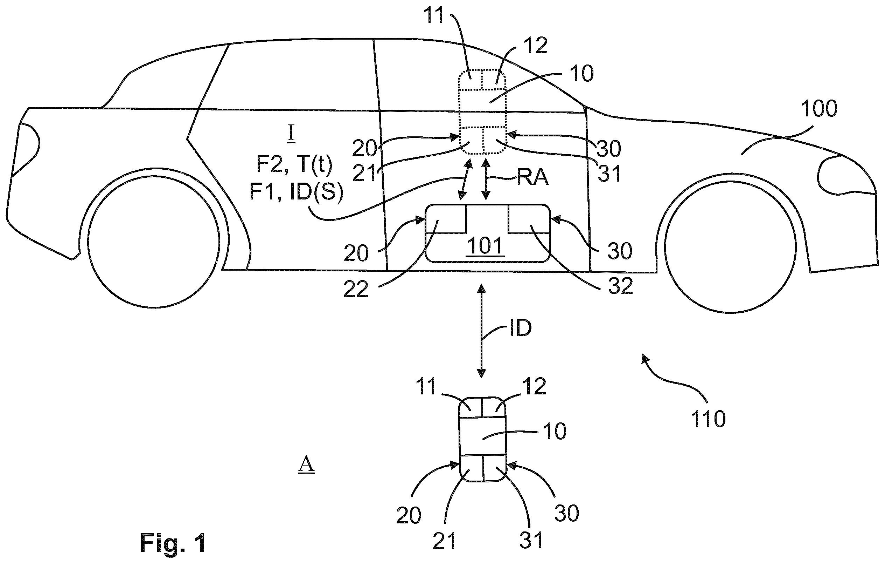

- Figur 1: eine schematische Seitenansicht eines Fahrzeugs mit einem erfindungsgemäßen System.

In der Figurenbeschreibung werden für die gleichen technischen Merkmale auch von unterschiedlichen Ausführungsbeispielen die identischen Bezugszeichen verwendet.

Die Figur 1 soll zur Erläuterung eines erfindungsgemäßen Verfahrens dienen. Das erfindungsgemäße Verfahren dient zur Steuerung eines mobilen Identifikationsgebers 10, welches sich außerhalb (unten in Figur 1) oder innerhalb (oben in der Figur 1) eines Fahrzeuges 100 befindet kann, wie es in der Figur 1 angedeutet ist. Der mobile Identifikationsgeber 10 kann ebenfalls als ein ID-Geber oder einfach als ein Schlüssel bezeichnet werden. Der mobile Identifikationsgeber 10 ist für eine Datenkommunikation ID mit einem Sicherheitssystem 101 des Fahrzeuges 100 vorgesehen.

Der mobile Identifikationsgeber 10 weist folgende Elemente auf: mindestens eine Kommunikationseinheit 11, um zumindest eine Datenkommunikation ID mit dem Sicherheitssystem 101 aufzubauen, und einen Bewegungssensor 12, um eine Bewegung des mobilen Identifikationsgebers 10 zu detektieren. Der Bewegungssensor 12 dient dazu, die mindestens eine Kommunikationseinheit 11 in Abhängigkeit der Bewegung des mobilen Identifikationsgebers 10 anzusteuern, insbesondere auszuschalten, wenn der Bewegungssensor 12 keine Bewegung des mobilen Identifikationsgebers 10 detektiert. Der Bewegungssensor 12 dient dazu, den ID-Geber gegen einen sogenannten "Relay-Station-Attack" Angriff zu schützen. Wenn der Bewegungssensor 12 über eine gewisse Zeitdauer keine Bewegung detektiert, wird die Kommunikationseinheit 11 des ID-Gebers deaktiviert, um zu verhindern, dass der ID-Geber bei Nichtbenutzung zur unberechtigten Öffnung des Fahrzeugs 100 genutzt wird und außerdem Energie gespart wird.

Im Rahmen der Erfindung wird eine Überprüfung mindestens einer Ortsposition I, A des mobilen Identifikationsgebers 10 im Verhältnis zum Fahrzeug 100 durchgeführt, wobei mindestens eine Funktion F1, F2 beim mobilen Identifikationsgeber 10 in Abhängigkeit der mindestens einen Ortsposition I, A des mobilen Identifikationsgebers 10 im Verhältnis zum Fahrzeug 100 aktiviert wird.

Grundsätzlich ist es denkbar, dass die Kommunikationseinheit 11 zwei unterschiedliche Funktionalitäten des mobilen Identifikationsgebers 10 im Verhältnis zum Fahrzeug 100 bereitstellen kann, nämlich außerhalb des Fahrzeuges 100 und innerhalb des Fahrzeuges 100. Außerhalb des Fahrzeuges 100 kann die Kommunikationseinheit 11 für eine Entriegelung des Fahrzeuges 100 dienen. Innerhalb des Fahrzeuges 100 kann die Kommunikationseinheit 11 einen Motorstart verifizieren und/oder eine Wegfahrsperre deaktivieren. Zudem kann die Kommunikationseinheit 11 innerhalb des Fahrzeuges 100 weitere Funktionen übernehmen, um den Bedienerkomfort und die Sicherheit zu erhöhen. Für die zwei unterschiedlichen Funktionalitäten des mobilen Identifikationsgebers 10 außerhalb und innerhalb des Fahrzeuges 100 kann die Kommunikationseinheit 11 zwei separate Schnittstellen oder eine gemeinsame Schnittstelle, bspw. in Form von Sende-und/oder Empfangseinheit(en), aufweisen.

Die Überprüfung der Ortsposition I, A des mobilen Identifikationsgebers 10 im Verhältnis zum Fahrzeug 100 kann mithilfe der Kommunikationseinheit 11 bzw. einer ggf. noch weiteren Schnittstelle der Kommunikationseinheit 11 durchgeführt werden. Zudem ist es denkbar, dass eine separate Erfassungseinheit 20 mit einer eigenen Schnittstelle für die Überprüfung der Ortsposition I, A des mobilen Identifikationsgebers 10 im Verhältnis zum Fahrzeug 100 vorgesehen sein kann.

Im Rahmen der Erfindung ist außerdem vorgesehen, dass die Überprüfung der Ortsposition I, A des mobilen Identifikationsgebers 10 im Verhältnis zum Fahrzeug in einem Sicherheitsabstand RA durchgeführt werden kann, wobei der Sicherheitsabstand RA kleiner, vorzugsweise mindestens 10 Mal kleiner, als die Reichweite der Datenkommunikation ID ist, wobei bevorzugt der Sicherheitsabstand RA maximal 10 cm beträgt. Hierzu kann eine Bluetooth- und/oder NFC-Technologie genutzt werden.

Im Rahmen der Erfindung ist es möglich, dass die Erfassungseinheit 20 innerhalb des mobilen Identifikationsgebers 10 und/oder innerhalb des Sicherheitssystems 101 des Fahrzeuges 100 implementiert ist. Zudem ist es denkbar, dass die Erfassungseinheit 20 ein Erfassungselement 21 innerhalb des mobilen Identifikationsgebers 10 und/oder ein Erfassungselement 22 innerhalb des Sicherheitssystems 101 des Fahrzeuges 100 aufweisen kann. Dabei können die Erfassungselemente 21, 22 miteinander kommunizieren.

Der Erfindungsgedanke liegt dabei darin, dass in Abhängigkeit der mindestens einen Ortsposition I, A des mobilen Identifikationsgebers 10 im Verhältnis zum Fahrzeug 100 aktiv mindestens eine, vorzugsweise mehrere, Funktion(en) F1, F2 beim mobilen Identifikationsgeber 10 aktiviert wird (werden). Die Ortspositionen I, A können, wie oben bereits erwähnt, eine Ortsposition I innerhalb des Fahrzeuges 100 und eine Ortsposition A außerhalb des Fahrzeuges 100 umfassen.

Im Rahmen des erfindungsgemäßen Verfahrens ist es ferner denkbar, dass die mindestens eine Ortsposition I, A des mobilen Identifikationsgebers im Verhältnis zum Fahrzeug 100 erst dann überprüft wird, wenn der Bewegungssensor 12 keine Bewegung des mobilen Identifikationsgebers 10 detektiert.

Im Rahmen des erfindungsgemäßen Verfahrens ist es weiterhin denkbar, dass die mindestens eine Funktion F1, F2 aktiviert wird, wenn eine erste Ortsposition I des mobilen Identifikationsgebers 10 innerhalb des Fahrzeuges 100 erfasst wurde.

Die mindestens eine Funktion F1, F2 soll dazu dienen, dass der mobile Identifikationsgeber 10 trotz der Motion-Funktion des Bewegungssensors 12 stets, insbesondere im Inneren des Fahrzeuges 100, durch das Fahrzeug 100 identifiziert und zuverlässig zum Start eines Motors und/oder zum Übertragen von persönlichen Daten genutzt werden kann. Die mindestens eine Funktion F1, F2 dient mit anderen Worten dazu, um im Inneren des Fahrzeuges 100 die vollständige Abschaltung des ID-Gebers durch den Bewegungssensor 12 zu verhindern und ggf. dennoch Energie zu sparen. Vorteilhafterweise kann der Bewegungssensor 12 auch im Inneren des Fahrzeuges 100 eingeschaltet bleiben oder nur für eine bestimmte Zeit t deaktiviert werden.

Die mindestens eine Funktion F1, F2 kann bspw. eine erste Funktion F1 umfassen, um die Sensitivität bzw. Sensibilität der Kommunikationseinheit 11 des ID-Gebers innerhalb des Fahrzeuges 100 zu verringern, was außerdem zu einem geringeren Energieverbrauch führt, und/oder den Bewegungssensor 12 zu deaktivieren. Mit anderen Worten kann die erste Funktion F1 dazu dienen, den mobilen Identifikationsgeber 10 in einen Schlafmodus, insbesondere für eine bestimmte Zeit t, zu überführen. Im Inneren des Fahrzeuges 100 reicht bereits eine geringe Sensitivität der Kommunikationseinheit 11 für die Datenkommunikation ID mit dem Sicherheitssystem 101, bspw. über eine LF-Kommunikation, um den ID-Geber durch das Fahrzeug 100 zu detektieren.

Zudem ist es denkbar, dass die erste Funktion F1 ein Ausschalten der Schnittstelle des ID-Gebers für die Funktionalität außerhalb des Fahrzeuges 100 umfassen kann, wenn der Bewegungssensor 12 keine Bewegung des ID-Gebers detektiert. Somit kann ein Ausschalten des Bewegungssensors 12 im Rahmen der ersten Funktion F1 gar vermieden werden, um eine Motion-Funktion des Bewegungssensors 12 außerhalb des Fahrzeuges 100 beizubehalten. Dies kann insbesondere beim Wechsel aus dem Inneren des Fahrzeuges 100 nach draußen von Vorteil sein.

Als eine zweite Funktion F2 kann ein Timer beim ID-Geber eingestellt werden, welcher nur für eine bestimmte Zeitdauer t die erste Funktion F1 ausführt, z. B. die Sensitivität der Kommunikationseinheit 11 herabsetzt und ggf. den Bewegungssensor 12 deaktiviert. Solange sich der ID-Geber im Fahrzeug 100 befindet, kann in regelmäßigen Abständen der Timer T erneuert bzw. getriggert werden, nach dem die Ortsposition I, A des mobilen Identifikationsgebers 10 im Verhältnis zum Fahrzeug 100 entsprechend überprüft wurde.

Im Rahmen der Erfindung ist es denkbar, dass die Funktionen F1, F2 durch den ID-Geber selbst (hierbei kann der ID-Geber das Fahrzeug 100 entsprechend informieren) oder durch das Fahrzeug 100 aktiviert werden. Hierzu kann eine Steuereinheit 30 vorgesehen sein, die innerhalb des mobilen Identifikationsgebers 10 und/oder innerhalb des Sicherheitssystems 101 des Fahrzeuges 100 implementiert werden kann. Zudem ist es denkbar, dass die Steuereinheit 30 eine Steuerelektronik 31 innerhalb des mobilen Identifikationsgebers 10 und/oder eine Steuerelektronik 32 innerhalb des Sicherheitssystems 101 des Fahrzeuges 100 aufweisen kann.

Die Datenkommunikation ID kann über eine Funkverbindung, insbesondere über eine Niederfrequenz-Funkverbindung durchgeführt werden. Die Datenkommunikation ID kann vorzugsweise mit einer Reichweite bis zu 2 m, vorzugsweise 1 m, bereitgestellt werden, um ungewollte Fernaktivierungen der Datenkommunikation ID zu vermeiden. Die Datenkommunikation ID kann zur Übermittlung eines Identifizierungscodes vom mobilen Identifikationsgeber 10 an das Sicherheitssystem 101 des Fahrzeuges dienen. Mithilfe des Identifizierungscodes kann die Zugangsberechtigung des Benutzers verifiziert werden (erste Funktionalität des ID-Gebers außerhalb des Fahrzeuges 100) und/oder der Motorstart freigegeben werden (zweite Funktionalität des ID-Gebers innerhalb des Fahrzeuges 100).

Als Bewegungssensor 12 kann ein Neigungsschalter, ein Lagesensor und/oder ein Beschleunigungssensor verwendet werden.

Zum Herstellen der ersten Funktionalität des ID-Gebers außerhalb des Fahrzeuges 100 und/oder der zweiten Funktionalität des ID-Gebers innerhalb des Fahrzeuges 100 kann die Datenkommunikation ID in regelmäßigen Abständen durchgeführt werden.

Im Rahmen der ersten Funktionalität des ID-Gebers außerhalb des Fahrzeuges 100 kann das Sicherheitssystem 101 des Fahrzeuges 100 die Umgebung nach einem berechtigten ID-Geber abtasten. Hierzu kann das Sicherheitssystem 101 des Fahrzeuges 100 die Datenkommunikation ID, vorzugsweise in regelmäßigen Abständen, starten. Zum Aktivieren, insbesondere zum Entriegeln, des Sicherheitssystems 101 kann das Sicherheitssystem 101 ein Wecksignal und/oder ein ID-Abfragesignal, vorzugsweise in regelmäßigen Abständen, aussenden.

Ein entsprechendes System 110 mit einem mobilen Identifikationsgeber 10 und einem Sicherheitssystem 101 eines Fahrzeuges 100 stellt ebenfalls einen Aspekt der Erfindung dar, wobei der mobile Identifikationsgeber 10 mindestens eine Kommunikationseinheit 11, um zumindest eine Datenkommunikation ID mit dem Sicherheitssystem 101 aufzubauen, und einen Bewegungssensor 12 aufweist, um eine Bewegung des mobilen Identifikationsgebers 10 zu detektieren. Dabei ist der Bewegungssensor 12 dazu aufgeführt, die mindestens eine Kommunikationseinheit 11 in Abhängigkeit der Bewegung des mobilen Identifikationsgebers 10 anzusteuern, insbesondere auszuschalten, wenn der Bewegungssensor 12 keine Bewegung des mobilen Identifikationsgebers 10 detektiert.

Im Rahmen des Systems 110 ist eine Erfassungseinheit 20 vorgesehen, die wie oben beschrieben ausgeführt sein kann, um mindestens eine Ortsposition I, A des mobilen Identifikationsgebers 10 im Verhältnis zum Fahrzeug 100 zu bestimmen, und wobei die Erfassungseinheit 20 dazu aufgeführt ist, mindestens eine Funktion F1, F2 beim mobilen Identifikationsgeber 10 in Abhängigkeit der mindestens einen Ortsposition I, A des mobilen Identifikationsgebers 10 im Verhältnis zum Fahrzeug 100 zu aktivieren.

Weiterhin kann im Rahmen des Systems 110 eine Steuereinheit 30 vorgesehen sein, die wie oben beschrieben ausgeführt sein kann und die dazu ausgelegt ist, ein Verfahren durchzuführen, welches wie oben beschrieben ablaufen kann.

Schließlich stellt ein entsprechender mobiler Identifikationsgeber 10 mit einer Steuereinheit 30 einen noch weiteren Aspekt der Erfindung dar, wobei die Steuereinheit 30 dazu ausgeführt ist, den mobilen Identifikationsgeber 10 gemäß einem Verfahren anzusteuern, welches wie oben beschrieben ablaufen kann.

Die voranstehende Erläuterung der Ausführungsformen beschreibt die vorliegende Erfindung ausschließlich im Rahmen von Beispielen.

### Bezugszeichenliste

- 10: mobiler Identifikationsgeber
- 11: Kommunikationseinheit
- 12: Bewegungssensor

- 20: Erfassungseinheit
- 21: Erfassungselement
- 22: Erfassungselement

- 30: Steuereinheit
- 31: Steuerelektronik
- 32: Steuerelektronik

- 100: Fahrzeug
- 101: Sicherheitssystem

- 110: System

- A: Ortsposition, zweite Ortsposition des mobilen Identifikationsgebers außerhalb des Fahrzeuges
- I: Ortsposition, erste Ortsposition des mobilen Identifikationsgebers innerhalb des Fahrzeuges

- ID: Datenkommunikation

- F1: Funktion, erste Funktion
- F2: Funktion, zweite Funktion

- RA: Sicherheitsabstand
- S: Sensibilität der Kommunikationseinheit

## Patentansprüche

1. Verfahren zur Steuerung eines mobilen Identifikationsgebers (10) für ein Sicherheitssystem (101) eines Fahrzeuges (100),
wobei der mobile Identifikationsgeber (10) folgende Elemente aufweist:
mindestens eine Kommunikationseinheit (11), um zumindest eine Datenkommunikation (ID) mit dem Sicherheitssystem (101) aufzubauen,
und einen Bewegungssensor (12), um eine Bewegung des mobilen Identifikationsgebers (10) zu detektieren,
wobei der Bewegungssensor (12) dazu dient, die mindestens eine Kommunikationseinheit (11) in Abhängigkeit der Bewegung des mobilen Identifikationsgebers (10) anzusteuern, insbesondere auszuschalten, wenn der Bewegungssensor (12) keine Bewegung des mobilen Identifikationsgebers (10) detektiert,
wobei eine Überprüfung (RA) mindestens einer Ortsposition (I, A) des mobilen Identifikationsgebers (10) im Verhältnis zum Fahrzeug (100) durchgeführt wird,
wobei mindestens eine Funktion (F1, F2) beim mobilen Identifikationsgeber (10) in Abhängigkeit der mindestens einen Ortsposition (I, A) des mobilen Identifikationsgebers (10) im Verhältnis zum Fahrzeug (100) aktiviert wird,
wobei die Überprüfung (RA) der Ortsposition (I, A) des mobilen Identifikationsgebers (10) im Verhältnis zum Fahrzeug (100) in einem Sicherheitsabstand (RA) durchgeführt wird,
und wobei der Sicherheitsabstand (RA) kleiner als die Reichweite der Datenkommunikation (ID) ist.

2. Verfahren nach Anspruch 1,
**dadurch gekennzeichnet,**
**dass** die mindestens eine Ortsposition (I, A) des mobilen Identifikationsgebers (10) im Verhältnis zum Fahrzeug (100) erst dann überprüft wird, wenn der Bewegungssensor (12) keine Bewegung des mobilen Identifikationsgebers (10) detektiert,
und/oder dass die mindestens eine Ortsposition (I, A) des mobilen Identifikationsgebers (10) im Verhältnis zum Fahrzeug (100) eine erste Ortsposition (I) innerhalb des Fahrzeuges (100) und/oder eine zweite Ortsposition (A) außerhalb des Fahrzeuges (100) vorsieht.

3. Verfahren nach einem der vorhergehenden Ansprüche,
**dadurch gekennzeichnet,**
**dass** die mindestens eine Funktion (F1, F2) aktiviert wird, wenn eine erste Ortsposition (I) des mobilen Identifikationsgebers (10) innerhalb des Fahrzeuges (100) erfasst wird, und/oder dass die mindestens eine Funktion (F1, F2) vorsieht, dass der mobile Identifikationsgeber (10) in einen Schlafmodus, insbesondere für eine bestimmte Zeit (t), überführt wird.

4. Verfahren nach einem der vorhergehenden Ansprüche,
**dadurch gekennzeichnet,**
**dass** die mindestens eine Funktion (F1, F2) folgende Funktionen (F1, F2) vorsieht:
eine erste Funktion (F1), um die Sensibilität (S) der mindestens einen Kommunikationseinheit (11) anzusteuern, insbesondere zu verringern, und/oder den Bewegungssensor (12) zu deaktivieren,
und/oder eine zweite Funktion (F2), um einen Timer (T), insbesondere für eine bestimmte Zeit (t), zu starten,
wobei insbesondere der Timer (T) dazu dient, die Sensibilität (S) der mindestens einen Kommunikationseinheit (11) für eine bestimmte Zeit (t) zu verringern und/oder den Bewegungssensor (12) für eine bestimmte Zeit (t) zu deaktivieren.

5. Verfahren nach einem der vorhergehenden Ansprüche,
**dadurch gekennzeichnet,**
**dass** die mindestens eine Funktion (F1, F2) eine zweite Funktion (F2) vorsieht, um einen Timer (T), insbesondere für eine bestimmte Zeit (t), zu starten,
wobei nach Ablauf des Timers (T) eine Überprüfung (RA) mindestens einer Position (I, A) des mobilen Identifikationsgebers (10) bezüglich des Fahrzeuges (100) durchgeführt wird,
und wobei der Timer (T) erneut gestartet, insbesondere getriggert, wird, wenn nach Ablauf des Timers (T) eine erste Position (I) des mobilen Identifikationsgebers (10) innerhalb des Fahrzeuges (100) erfasst wird.

6. Verfahren nach einem der vorhergehenden Ansprüche,
**dadurch gekennzeichnet,**
**dass** die Datenkommunikation (ID) über eine Funkverbindung, insbesondere über eine Niederfrequenz-Funkverbindung (LF) durchgeführt wird,
und/oder dass die Datenkommunikation (ID) mit einer Reichweite bis zu 2 m, vorzugsweise 1 m, durchgeführt wird,
und/oder dass die Datenkommunikation (ID) zur Übermittlung eines Identifizierungscodes vom mobilen Identifikationsgeber (10) an das Sicherheitssystem (101) des Fahrzeuges (100) dient.

7. Verfahren nach einem der vorhergehenden Ansprüche,
**dadurch gekennzeichnet,**
**dass** als der Bewegungssensor (12) ein Neigungsschalter, ein Lagesensor und/oder ein Beschleunigungssensor verwendet werden/wird.

8. Verfahren nach einem der vorhergehenden Ansprüche,
**dadurch gekennzeichnet,**
**dass** die Datenkommunikation (ID) in regelmäßigen Abständen durchgeführt wird,
und/oder dass das Sicherheitssystem (101) des Fahrzeuges (100) die Datenkommunikation (ID), vorzugsweise in regelmäßigen Abständen, startet,
und/oder dass das Sicherheitssystem (101) des Fahrzeuges (100) ein Wecksignal und/oder ein ID-Abfragesignal, vorzugsweise in regelmäßigen Abständen, aussendet.

9. Verfahren nach einem der vorhergehenden Ansprüche,
**dadurch gekennzeichnet,**
**dass** der Sicherheitsabstand (RA) mindestens 10 Mal kleiner als die Reichweite der Datenkommunikation (ID) ist,
wobei bevorzugt der Sicherheitsabstand (RA) maximal 10 cm beträgt.

10. Verfahren nach einem der vorhergehenden Ansprüche,
**dadurch gekennzeichnet,**
**dass** eine Bluetooth- und/oder NFC-Technologie genutzt wird, um eine erste Ortsposition (I) des mobilen Identifikationsgebers (10) innerhalb des Fahrzeuges (100) zu überprüfen.

11. System (110) mit einem mobilen Identifikationsgeber (10) und einem Sicherheitssystem (101) eines Fahrzeuges (100),
wobei der mobile Identifikationsgeber (10) folgende Elemente aufweist:
mindestens eine Kommunikationseinheit (11), um zumindest eine Datenkommunikation (ID) mit dem Sicherheitssystem (101) aufzubauen,
und einen Bewegungssensor (12), um eine Bewegung des mobilen Identifikationsgebers (10) zu detektieren,
wobei der Bewegungssensor (12) dazu aufgeführt ist, die mindestens eine Kommunikationseinheit (11) in Abhängigkeit der Bewegung des mobilen Identifikationsgebers (10) anzusteuern, insbesondere auszuschalten, wenn der Bewegungssensor (12) keine Bewegung des mobilen Identifikationsgebers (10) detektiert,
wobei eine Erfassungseinheit (20) vorgesehen ist, um mindestens eine Ortsposition (I, A) des mobilen Identifikationsgebers (10) im Verhältnis zum Fahrzeug (100) zu bestimmen,
und wobei die Erfassungseinheit (20) dazu aufgeführt ist, mindestens eine Funktion (F1, F2) beim mobilen Identifikationsgeber (10) in Abhängigkeit der mindestens einen Ortsposition (I, A) des mobilen Identifikationsgebers (10) im Verhältnis zum Fahrzeug (100) zu aktivieren,
und wobei eine Steuereinheit (30) vorgesehen ist, die dazu ausgeführt ist, ein Verfahren nach einem der vorhergehenden Ansprüche durchzuführen.

12. System (110) nach dem vorhergehenden Anspruch,
**dadurch gekennzeichnet,**
**dass** die Steuereinheit (30) innerhalb des mobilen Identifikationsgebers (10) und/oder innerhalb des Sicherheitssystems (101) des Fahrzeuges (100) vorgesehen ist,
und/oder dass die Steuereinheit (30) eine Steuerelektronik (31) innerhalb des mobilen Identifikationsgebers (10) und/oder eine Steuerelektronik (32) innerhalb des Sicherheitssystems (101) des Fahrzeuges (100) aufweist.

13. System (110) nach einem der vorhergehenden Ansprüche,
**dadurch gekennzeichnet,**
**dass** die Erfassungseinheit (20) innerhalb des mobilen Identifikationsgebers (10) und/oder innerhalb des Sicherheitssystems (101) des Fahrzeuges (100) vorgesehen ist, und/oder dass die Erfassungseinheit (20) ein Erfassungselement (21) innerhalb des mobilen Identifikationsgebers (10) und/oder ein Erfassungselement (22) innerhalb des Sicherheitssystems (101) des Fahrzeuges (100) aufweist.

14. Mobiler Identifikationsgeber (10) mit einer Steuereinheit (30), die dazu ausgeführt ist, den mobilen Identifikationsgeber (10) gemäß einem Verfahren nach einem der vorhergehenden Ansprüche anzusteuern.

## Claims

1. Method for controlling a mobile identification transmitter (10) for a safety system (101) of a vehicle (100),
wherein the mobile identification transmitter (10) has the following elements:
at least one communication unit (11) for establishing at least one data communication (ID) with the security system (101),
and a motion sensor (12) to detect movement of the mobile identification transmitter (10), wherein the motion sensor (12) serves to actuate the at least one communication unit (11) as a function of the movement of the mobile identification transmitter (10), in particular to switch it off if the motion sensor (12) does not detect any movement of the mobile identification transmitter (10),
wherein a check (RA) of at least one local position (I, A) of the mobile identification transmitter (10) in relation to the vehicle (100) is performed,
wherein at least one function (F1, F2) is activated in the mobile identification transmitter (10) as a function of the at least one local position (I, A) of the mobile identification transmitter (10) in relation to the vehicle (100),
wherein the check (RA) of the local position (I, A) of the mobile identification transmitter (10) in relation to the vehicle (100) is carried out at a safety distance (RA),
and wherein the safety distance (RA) is smaller than the range of data communication (ID).

2. Method according to claim 1,
**characterized in that**
the at least one local position (I, A) of the mobile identification transmitter (10) in relation to the vehicle (100) is only checked when the motion sensor (12) does not detect any movement of the mobile identification transmitter (10),
and/or that the at least one local position (I, A) of the mobile identification transmitter (10) in relation to the vehicle (100) provides a first local position (I) inside the vehicle (100) and/or a second local position (A) outside the vehicle (100).

3. A method according to any one of the preceding claims,
**characterized in that**
the at least one function (F1, F2) is activated when a first local position (I) of the mobile identification transmitter (10) within the vehicle (100) is detected,
and/or that the at least one function (F1, F2) provides that the mobile identification transmitter (10) is transferred to a sleep mode, in particular for a specific time (t).

4. A method according to any one of the preceding claims,
**characterized in that**
the at least one function (F1, F2) provides the following functions (F1, F2):
a first function (F1) for controlling, in particular reducing, the sensitivity (S) of the at least one communication unit (11) and/or deactivating the motion sensor (12),
and/or a second function (F2) to start a timer (T), in particular for a specific time (t),
wherein, in particular, the timer (T) serves to reduce the sensitivity (S) of the at least one communication unit (11) for a specific time (t) and/or to deactivate the motion sensor (12) for a specific time (t).

5. A method according to any one of the preceding claims,
**characterized in that**
the at least one function (F1, F2) provides a second function (F2) in order to start a timer (T), in particular for a specific time (t),
wherein a check (RA) of at least one position (I, A) of the mobile identification transmitter (10) with respect to the vehicle (100) is carried out after the timer (T) has elapsed,
and wherein the timer (T) is restarted, in particular triggered, when a first position (I) of the mobile identification transmitter (10) within the vehicle (100) is detected after the timer (T) has elapsed.

6. A method according to any one of the preceding claims,
**characterized in that**
the data communication (ID) is carried out via a radio link, in particular via a low-frequency (LF) radio link,
and/or that the data communication (ID) is carried out with a range of up to 2 m, preferably 1 m,
and/or that the data communication (ID) is used to transmit an identification code from the mobile identification transmitter (10) to the security system (101) of the vehicle (100).

7. A method according to any one of the preceding claims,
**characterized in that**
a tilt switch, a position sensor and/or an acceleration sensor is/are used as the motion sensor (12).

8. A method according to any one of the preceding claims,
**characterized in that**
data communication (ID) is carried out at regular intervals,
and/or that the security system (101) of the vehicle (100) starts the data communication (ID), preferably at regular intervals,
and/or that the security system (101) of the vehicle (100) transmits a wake-up signal and/or an ID request signal, preferably at regular intervals.

9. A method according to any one of the preceding claims,
**characterized in that**
the safety distance (RA) is at least 10 times smaller than the range of data communication (ID),
whereby the safety distance (RA) is preferably a maximum of 10 cm.

10. A method according to any one of the preceding claims,
**characterized in that**
a Bluetooth and/or NFC technology is used to check a first local position (I) of the mobile identification transmitter (10) within the vehicle (100).

11. System (110) with a mobile identification transmitter (10) and a security system (101) of a vehicle (100),
wherein the mobile identification transmitter (10) has the following elements:
at least one communication unit (11) for establishing at least one data communication (ID) with the security system (101),
and a motion sensor (12) to detect movement of the mobile identification transmitter (10), wherein the motion sensor (12) is arranged to actuate the at least one communication unit (11) as a function of the movement of the mobile identification transmitter (10), in particular to switch it off if the motion sensor (12) does not detect any movement of the mobile identification transmitter (10),
wherein a detection unit (20) is provided in order to determine at least one local position (I, A) of the mobile identification transmitter (10) in relation to the vehicle (100),
and wherein the detection unit (20) is arranged to activate at least one function (F1, F2) at the mobile identification transmitter (10) as a function of the at least one local position (I, A) of the mobile identification transmitter (10) in relation to the vehicle (100),
and wherein a control unit (30) is provided which is adapted to carry out a method according to one of the preceding claims.

12. System (110) according to the preceding claim,
**characterized in that**
the control unit (30) is provided within the mobile identification transmitter (10) and/or within the security system (101) of the vehicle (100),
and/or that the control unit (30) has control electronics (31) within the mobile identification transmitter (10) and/or control electronics (32) within the safety system (101) of the vehicle (100).

13. System (110) according to one of the preceding claims,
**characterized in that**
the detection unit (20) is provided within the mobile identification transmitter (10) and/or within the security system (101) of the vehicle (100), and/or **in that** the detection unit (20) has a detection element (21) within the mobile identification transmitter (10) and/or a detection element (22) within the security system (101) of the vehicle (100).

14. Mobile identification transmitter (10) with a control unit (30), which is designed to control the mobile identification transmitter (10) according to a method according to one of the preceding claims.

## Revendications

1. Procédé de commande d'un transmetteur d'identification mobile (10) pour un système de sécurité (101) d'un véhicule (100),
dans lequel le transmetteur d'identification mobile (10) présente les éléments suivants :
au moins une unité de communication (11) pour établir au moins une communication de données (ID) avec le système de sécurité (101),
et un capteur de mouvement (12) pour détecter un mouvement du transmetteur d'identification mobile (10),
le capteur de mouvement (12) servant à commander l'au moins une unité de communication (11) en fonction du mouvement du transmetteur d'identification mobile (10), en particulier à la désactiver, lorsque le capteur de mouvement (12) ne détecte aucun mouvement du transmetteur d'identification mobile (10),
dans lequel une vérification (RA) d'au moins une position locale (I, A) du transmetteur d'identification mobile (10) par rapport au véhicule (100) est effectuée,
dans lequel au moins une fonction (F1, F2) est activée au niveau du transmetteur d'identification mobile (10) en fonction de la au moins une position locale (I, A) du transmetteur d'identification mobile (10) par rapport au véhicule (100),
dans lequel la vérification (RA) de la position locale (I, A) du transmetteur d'identification mobile (10) par rapport au véhicule (100) est effectuée à une distance de sécurité (RA),
et dans lequel la distance de sécurité (RA) est inférieure à la portée de la communication de données (ID).

2. Procédé selon la revendication 1,
**caractérisé en ce que**
la au moins une position locale (I, A) du transmetteur d'identification mobile (10) par rapport au véhicule (100) n'est vérifiée que lorsque le capteur de mouvement (12) ne détecte aucun mouvement du transmetteur d'identification mobile (10),
et/ou **en ce que** la au moins une position locale (I, A) du transmetteur d'identification mobile (10) par rapport au véhicule (100) prévoit une première position locale (I) à l'intérieur du véhicule (100) et/ou une deuxième position locale (A) à l'extérieur du véhicule (100).

3. Procédé selon l'une quelconque des revendications précédentes,
**caractérisé en ce que**
la au moins une fonction (F1, F2) est activée lorsqu'une première position locale (I) du transmetteur d'identification mobile (10) est détectée à l'intérieur du véhicule (100),
et/ou **en ce que** ladite au moins une fonction (F1, F2) prévoit que le transmetteur d'identification mobile (10) dans un mode de sommeil, en particulier pendant une durée déterminée (t).

4. Procédé selon l'une quelconque des revendications précédentes,
**caractérisé en ce que**
la au moins une fonction (F1, F2) prévoit les fonctions suivantes (F1, F2) :
une première fonction (F1) pour commander la sensibilité (S) de la au moins une unité de communication (11), en particulier pour la réduire, et/ou pour désactiver le capteur de mouvement (12),
et/ou une deuxième fonction (F2) pour lancer une minuterie (T), en particulier pour une durée déterminée (t),
dans lequel, en particulier, la minuterie (T) sert à réduire la sensibilité (S) de la au moins une unité de communication (11) pendant une durée déterminée (t) et/ou à désactiver le capteur de mouvement (12) pendant une durée déterminée (t).

5. Procédé selon l'une quelconque des revendications précédentes,
**caractérisé en ce que**
la au moins une fonction (F1, F2) prévoit une deuxième fonction (F2) pour démarrer une minuterie (T), en particulier pour une durée déterminée (t),
une vérification (RA) d'au moins une position (I, A) du transmetteur d'identification mobile (10) par rapport au véhicule (100) étant effectuée après l'expiration de la minuterie (T),
et dans lequel la minuterie (T) est redémarrée, en particulier déclenchée, lorsqu'une première position (I) du transmetteur d'identification mobile (10) à l'intérieur du véhicule (100) est détectée après l'expiration de la minuterie (T).

6. Procédé selon l'une quelconque des revendications précédentes,
**caractérisé en ce que**
la communication de données (ID) est effectuée via une liaison radio, en particulier via une liaison radio basse fréquence (LF),
et/ou **en ce que** la communication de données (ID) est effectuée avec une portée allant jusqu'à 2 m, de préférence 1 m,
et/ou **en ce que** la communication de données (ID) sert à transmettre un code d'identification du transmetteur d'identification mobile (10) au système de sécurité (101) du véhicule (100).

7. Procédé selon l'une quelconque des revendications précédentes,
**caractérisé en ce qu'**
un interrupteur d'inclinaison, un capteur de position et/ou un capteur d'accélération sont/seront utilisés comme le capteur de mouvement (12).

8. Procédé selon l'une quelconque des revendications précédentes,
**caractérisé en ce que**
la communication des données (ID) soit effectuée à intervalles réguliers,
et/ou **en ce que** le système de sécurité (101) du véhicule (100) démarre la communication de données (ID), de préférence à intervalles réguliers,
et/ou **en ce que** le système de sécurité (101) du véhicule (100) émet un signal de réveil et/ou un signal d'interrogation d'ID, de préférence à intervalles réguliers.

9. Procédé selon l'une quelconque des revendications précédentes,
**caractérisé en ce que**
la distance de sécurité (RA) est au moins 10 fois inférieure à la portée de la communication de données (ID),
la distance de sécurité (RA) étant de préférence de 10 cm au maximum.

10. Procédé selon l'une quelconque des revendications précédentes,
**caractérisé en ce qu'**
une technologie Bluetooth et/ou NFC est utilisée pour vérifier une première position locale (I) du transmetteur d'identification mobile (10) à l'intérieur du véhicule (100).

11. Système (110) comprenant un transmetteur d'identification mobile (10) et un système de sécurité (101) d'un véhicule (100),
dans lequel le transmetteur d'identification mobile (10) présente les éléments suivants :
au moins une unité de communication (11) pour établir au moins une communication de données (ID) avec le système de sécurité (101),
et un capteur de mouvement (12) pour détecter un mouvement du transmetteur d'identification mobile (10),
le capteur de mouvement (12) étant répertorié pour commander l'au moins une unité de communication (11) en fonction du mouvement du transmetteur d'identification mobile (10), en particulier pour la désactiver, lorsque le capteur de mouvement (12) ne détecte aucun mouvement du transmetteur d'identification mobile (10),
une unité de détection (20) étant prévue pour déterminer au moins une position locale (I, A) du transmetteur d'identification mobile (10) par rapport au véhicule (100),
et dans lequel l'unité de détection (20) est répertoriée pour activer au moins une fonction (F1, F2) au niveau du transmetteur d'identification mobile (10) en fonction de la au moins une position locale (I, A) du transmetteur d'identification mobile (10) par rapport au véhicule (100),
et dans lequel il est prévu une unité de commande (30) qui est adaptée pour exécuter un procédé selon l'une des revendications précédentes.

12. Système (110) selon la revendication précédente,
**caractérisé en ce que**
l'unité de commande (30) est prévue à l'intérieur du transmetteur d'identification mobile (10) et/ou à l'intérieur du système de sécurité (101) du véhicule (100),
et/ou **en ce que** l'unité de commande (30) comporte une électronique de commande (31) à l'intérieur du transmetteur d'identification mobile (10) et/ou une électronique de commande (32) à l'intérieur du système de sécurité (101) du véhicule (100).

13. Système (110) selon l'une des revendications précédentes,
**caractérisé en ce que**
l'unité de détection (20) est prévue à l'intérieur du transmetteur d'identification mobile (10) et/ou à l'intérieur du système de sécurité (101) du véhicule (100), et/ou **en ce que** l'unité de détection (20) présente un élément de détection (21) à l'intérieur du transmetteur d'identification mobile (10) et/ou un élément de détection (22) à l'intérieur du système de sécurité (101) du véhicule (100).

14. Transmetteur d'identification mobile (10) comprenant une unité de commande (30) adaptée pour commander le transmetteur d'identification mobile (10) selon un procédé selon l'une quelconque des revendications précédentes.
